## Europäisches Patentamt
## European Patent Office
## Office européen des brevets

(19) ⑲

(11) Numéro de publication: **0 156 697**
**B1**

(12) **FASCICULE DE BREVET EUROPEEN**

(45) Date de publication du fascicule du brevet:
07.01.88

(21) Numéro de dépôt: **85400371.2**

(22) Date de dépôt: **27.02.85**

(51) Int. Cl.⁴: **F 16 F 13/00, B 60 K 5/12**

(54) Perfectionnements aux supports antivibratoires hydrauliques.

(30) Priorité: **27.02.84 FR 8402969**

(43) Date de publication de la demande:
**02.10.85 Bulletin 85/40**

(45) Mention de la délivrance du brevet:
**07.01.88 Bulletin 88/1**

(84) Etats contractants désignés:
**BE DE GB IT NL SE**

(56) Documents cités:
**EP - A - 0 040 290**
**EP - A - 0 072 262**
**EP - A - 0 098 330**
**FR - A - 2 372 351**
**FR - A - 2 392 285**
**FR - A - 2 415 241**
**GB - A - 2 041 485**
**GB - A - 2 041 488**
**GB - A - 2 132 311**

**PATENTS ABSTRACTS OF JAPAN, volume 6, no. 240,**
**(M-174)(1118) 27 novembre 1982,**

(73) Titulaire: **HUTCHINSON, 2 rue Balzac, F-75008 Paris (FR)**

(72) Inventeur: **Ray, Jean, 6, rue du Stade Donnemain,**
**F-28200 Chateaudun (FR)**
Inventeur: **Gregoire, Daniel, 14, rue Louis Armand,**
**F-28200 Chateaudun (FR)**
Inventeur: **Jouade, Pierre, 21, rue Mont Barry la Chapelle**
**du Noyé, F-28200 Chateaudun (FR)**

(74) Mandataire: **Behaghel, Pierre et al, CABINET**
**PLASSERAUD 84 rue d'Amsterdam, F-75009 Paris (FR)**

ACTORUM AG

## Description

L'invention concerne les dispositifs antivibratoires destinés à être interposés aux fins de support et d'amortissement entre deux éléments rigides, l'amortissement faisant intervenir le refoulement d'un liquide à travers un passage étranglé, et les déplacements relatifs à amortir des deux éléments rigides comprenant d'une part des oscillations de relativement grande amplitude (c'est-à-dire supérieure au mm) à fréquence relativement basse (c'est-à-dire inférieure à 20 Hz) et d'autre part des vibrations de relativement faible amplitude (c'est-à-dire inférieure à 0,5 mm) à fréquence relativement élevée (c'est-à-dire supérieure à 20 Hz).

A titre d'exemple non limitatif, on indique que de tels supports peuvent être montés entre un châssis de véhicule et le moteur de ce véhicule, les oscillations relativement amples à amortir étant celles créés par les irrégularités et variations de déclivité du sol lors de la circulation du véhicule sur ce sol et les vibrations à amortir étant celles dues au fonctionnement du moteur.

L'invention concerne plus particulièrement, parmi les supports du genre en question, ceux qui sont constitués par un boîtier étanche interposé entre les deux éléments rigides, boîtier comportant deux pièces rigides solidarisables respectivement avec les deux éléments rigides, une première paroi élastique reliant de façon étanche l'une des pièces rigides à une armature annulaire rigide faisant partie de la seconde pièce, cette paroi délimitant avec la première pièce l'une des deux extrémités axiales du boîtier, une seconde paroi élastique portée de manière étanche par l'armature annulaire et délimitant la seconde extrémité axiale du boîtier, une cloison déformable également portée de manière étanche par l'armature annulaire, entre les deux parois élastiques et divisant l'intérieur du boîtier en deux chambres, ces deux chambres communiquant entre elles par le passage étranglé ci-dessus, des moyens pour limiter à une amplitude faible, c'est-à-dire inférieure à 1 mm, les déformations de la cloison selon la direction axiale perpendiculaire à son plan moyen, et une masse liquide remplissant l'une des deux chambres et au moins la portion, de l'autre chambre, contiguë à la cloison déformable.

Avec un tel support, connu par exemple par le document FR-A-2 372 351, une vibration de fréquence élevée et de faible amplitude exercée entre les deux éléments rigides engendre des déplacements relatifs correspondants des deux pièces rigides, lesquels sont transmis à la cloison déformable par le liquide et se traduisent par une succession rapide de déformations alternatives de cette cloison perpendiculairement à elle-même, d'amplitude inférieure à la valeur maximum possible: les dimensions de la cloison sont en effet suffisantes pour que le liquide ne soit pas alors refoulé à travers le passage étranglé selon des sens opposés en synchronisme avec ladite vibration.

Au contraire, pour les oscillations d'amplitude plus élevée et de fréquence plus basse, l'amplitude des déformations correspondantes de la cloison atteint sa valeur maximum possible et le liquide est alors refoulé à travers le passage étranglé, ce qui assure l'amortissement hydraulique désiré par étranglement de ce liquide.

De nombreuses solutions ont été proposées pour constituer la cloison déformable, les moyens limitant les déformations de cette cloison et le passage étranglé.

En particulier, dans le document EP-A-0 072 262, il a été proposé de constituer la cloison déformable par une membrane mince en matériau élastique entourée d'un bourrelet annulaire continu venu de moulage avec elle, bourrelet dont une face est appliquée axialement, directement ou non, contre la paroi élastique en regard, et de constituer essentiellement le passage étranglé par un canal curviligne.

L'invention propose un perfectionnement de cette dernière construction conduisant à une réalisation particulièrement économique et robuste.

Selon ce perfectionnement, l'autre face du bourrelet est appliquée axialement contre une rondelle métallique dont le bord extérieur déborde radialement au-delà du bourrelet et est fixé sur l'armature annulaire rigide ci-dessus, entre les deux parois élastiques, le canal curviligne est délimité intérieurement par la face externe du bourrelet; sur l'une de ses faces axiales, par la rondelle; et extérieurement et sur son autre face axiale, par des plages de la susdite paroi élastique en regard, et ledit canal curviligne communique avec la première chambre par une lumière évidée dans le bord extérieur de la rondelle métallique et avec la seconde chambre par une rainure coudée creusée dans la face intérieure de la paroi élastique en regard.

Dans des modes de réalisation préférés, on a recours en outre à l'une et/ou à l'autre des dispositions suivantes:

– la rondelle constitue la portion périphérique d'un disque mince perforé,

– dans un support selon l'alinéa précédent, le bourrelet est encagé jointivement entre la rondelle et la portion périphérique d'un second disque métallique mince perforé de plus petit diamètre que le premier,

– dans un support selon l'alinéa précédent, les moyens pour limiter l'amplitude des déformations de la membrane comprennent des saillies prévues sur cette membrane et/ou sur les faces, des disques, en regard de ladite membrane,

– les saillies ci-dessus sont des bossages bombés, de préférence hémisphériques, venus de moulage avec la membrane,

– la paroi élastique qui vient en contact, directement ou non, avec le bourrelet et qui délimite en partie le passage étranglé est la première paroi élastique ci-dessus,

– la fixation du bord extérieur de la rondelle sur l'armature annulaire rigide est assurée par serrage de ce bord entre une bague métallique appliquée axialement contre cette armature et un rebord annulaire rabattu d'une plaquette métallique comprise par ladite armature.

L'invention comprend, mises à part ces dispositions principales, certaines autres dispositions qui s'utilisent de préférence en même temps et dont il sera plus explicitement question ci-après.

Dans ce qui suit, l'on va décrire des modes de réalisation préféré de l'invention en se référant au dessin ci-annexé d'une manière bien entendu non limitative.

La figure 1, de ce dessin, montre en coupe axiale un support antivibratoire hydraulique établi selon l'invention.

La figure 2 montre en plan la cloison déformable centrale comprise par ce support.

Le support en question est destiné à être interposé verticalement entre un organe porteur rigide tel qu'un châssis de vehicule et un organe supporté rigide tel qu'un moteur à combustion interne.

Ce support se présente sous la forme générale d'un boîtier étanche comportant, d'une façon connue en soi:

– une armature annulaire 1 prolongée horizontalement par deux pattes perforées 2 solidarisables, notamment par boulonnage, avec l'organe porteur et renforcées par des rebords rabattus $2_1$,

– un chapeau rigide 3, par exemple en forme de boulon dont la portion filetée s'étend vers le haut, solidarisable avec l'organe supporté,

– une paroi tronconique épaisse et étanche 4 en caoutchouc ou matériau élastique analogue adhérée respectivement sur l'armature 1 et sur le chapeau 3 et propre à résister élastiquement à la compression axiale,

– et une paroi élastique étanche 5 dont le pourtout est fixé de façon étanche sur l'armature annulaire 1.

Une cloison déformable 6 divise l'intérieur de ce boîtier en deux chambres A et B, toutes les deux remplies de liquide.

La communication du liquide entre ces deux chambres est effectuée exclusivement à travers un passage étranglé 7 constamment ouvert.

C'est essentiellement sur la constitution de la cloison 6 et de son environnement, y compris le passage 7, que porte la présente invention.

La cloison 6 en question est ici constituée par une membrane élastique mince, en caoutchouc ou matériau élastomère, entourée par un bourrelet annulaire continu 8 plus épais qu'elle et venu de moulage avec elle.

La plupart des éléments ici considérés, et en particulier l'armature 1, les parois élastiques 4 et 5, la membrane 6 et son bourrelet 8 présentent des formes de révolution autour du même axe X.

Cet axe X définit une direction qui est appelée «axiale» dans le présent mémoire et qui est verticale dans l'exemple illustré.

De même les deux parois élastiques 4 et 5 sont supposées dans ce qui suit situées respectivement en haut et en bas, pour simplifier la description, mais de façon non limitative.

Le bourrelet 8 est délimité axialement par deux faces transversales planes parallèles et extérieurement par une face cylindrique de révolution de diamètre d.

Ce bourrelet 8 est enserré entre deux disques métalliques minces perforés 9 et 10 prenant appui respectivement sur ses deux faces planes.

Le premier disque 9 présente un diamètre D supérieur à d et son pourtour $9_1$ est fixé sur l'armature annulaire 1.

Cette fixation est assurée par serrage dudit pourtour $9_1$ entre d'une part l'extrémité axiale inférieure d'une bague cylindrique 11 dont l'extrémité axiale supérieure est appliquée axialement contre l'armature 1 et d'autre part le bord annulaire inférieur 12, rabattu vers l'axe puis vers le haut à façon d'un sertissage, d'un collet métallique 12 qui entoure jointivement ladite bague 11 et dont un prolongement radial $12_2$ est soudé sur ladite armature 1.

Entre le pourtoir $9_1$ et le bord serti $12_1$ sont serrés en outre:

– le bord $5_1$ de la paroi élastique 5, laquelle est avantageusement constituée par une feuille mince plissée très déformable,

– et le bord $13_1$ d'un capot inférieur de protection 13 perforé en son centre 14.

Le diamètre du second disque 10 est égal à celui d du bourrelet 8.

Le pourtoir de ce second disque vient en contact avec une portée complémentaire ménagée dans la face intérieure de la paroi élastique 4.

Quant au passage étranglé 7, il comporte essentiellement un canal incurvé $7_1$ en arc de cercle autour de l'axe X et s'étend sur un arc généralement compris entre 180 et 300°.

Ce canal $7_1$ est délimité:
– intérieurement par la face cylindrique externe du bourrelet 8,
– inférieurement par une plage annulaire $9_2$, du premier disque 9, intérieure à son pourtour $9_1$
– extérieurement et supérieurement, par deux faces correspondantes ménagées dans la base de la paroi élastique 4.

Les communications entre les deux extrémités de ce canal curviligne $7_1$ et respectivement les deux chambres A et B sont assurées très simplement, la première par une lumière $7_2$ évidée dans la plage $9_2$ du premier disque 9 et la seconde par une rainure coudée $7_3$ creusée dans la face intérieure de la paroi 4.

Le canal curviligne $7_1$ qui vient dêtre décrit peut être réalisé d'une manière extrêmement simple, n'exigeant aucun creusement de tunnel dans une pièce massive rigide ou élastique: ce canal est automatiquement réalisé par la simple juxtaposition mutuelle du disque 9, de la membrane 6, 8 et de l'embase de la paroi 4.

Il est à noter en outre que la présence d'un organe rigide métallique, savoir le disque 9, parmi ceux qui délimitent directement ledit canal curviligne $7_1$ confère à ce dernier le minimum d'indéformabilité requis à la longue.

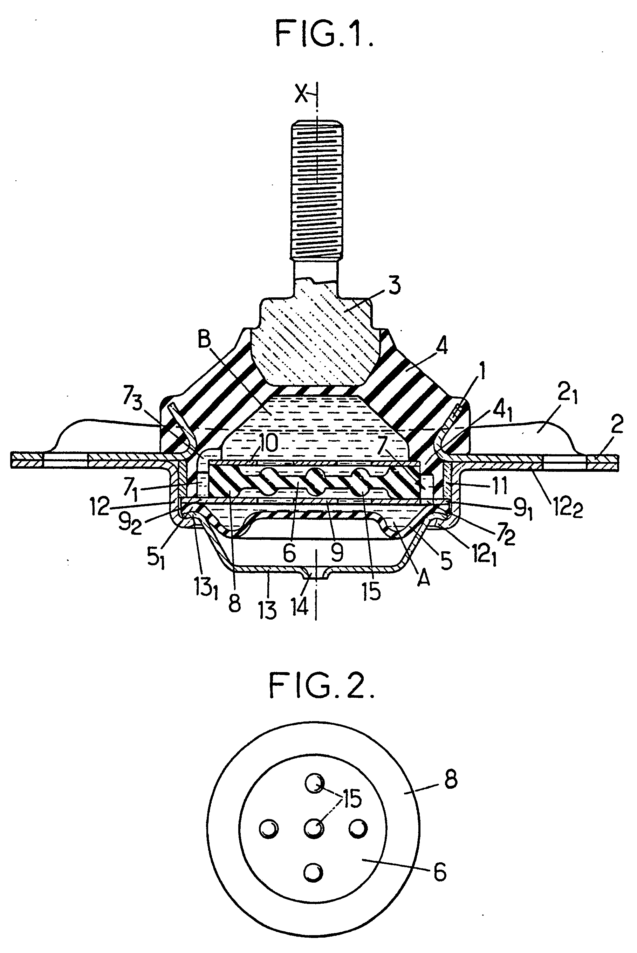

On voit sur la figure 1 que la base de la paroi élastique 4 est en définitive constituée par une jupe cylindrique relativement épaisse $4_1$ d'axe X reposant inférieurement sur le disque 9 et interposé radialement et jointivement — à l'exception de sa portion basse evidée partiellement par le canal curviligne $7_1$ — entre le bourrelet 8 et la bague 11.

La différence entre les épaisseurs axiales de la membrane 6 et de son bourrelet 8 est largement supérieure à l'amplitude des débattements autorisés pour cette membrane, amplitude qui doit être inférieure à 0,5 mm, ainsi que dit plus haut.

Pour obtenir une telle limitation, on fait comprendre à l'une et/ou à l'autre des faces en regard de la membrane 6 et des disques 9 et 10 des saillies appropriées.

Dans le mode de réalisation illustré, ces saillies sont constituées par des bossages hémisphériques 15 venus de moulage avec la membrane 6.

L'un de ces bossages est ici prévu au centre de chacune des deux faces de la membrane et est entouré par une couronne de quatre autres bossages identiques.

Mais bien entendu les bossages en question pourraient affecter des formes différentes, par exemple celle de nervures à crêtes arrondies, et/ou être répartis autrement, par exemple selon plusieurs couronnes concentriques.

Le fonctionnement du support antivibratoire hydraulique décrit ci-dessus est celui qui a été indiqué précédemment:

– tant qu'il s'agit d'amortir les vibrations, de l'organe supporté, présentant une fréquence relativement élevée et une petite amplitude (savoir de l'ordre du dixième de mm), les déplacements correspondants de la masse de liquide contenue dans le support sont totalement compensés par les déformations de la membrane 6 sans que l'étranglement de ce liquide dans le passage 7 puisse jouer un rôle quelconque,

– au contraire, lorsqu'un déplacement relatif entre lorgane porteur et l'organe supporté est relativement lent et dépasse l'amplitude correspondant à la course maximum de la membrane 6, le liquide de l'un des compartiments A et B est refoulé dans l'autre à travers le passge 7, lequel assure un amortissement «hydraulique» au sens classique.

En suite de quoi, et quel que soit le mode de réalisation adopté, on dispose finalement d'un support antivibratoire dont la constitution et le fonctionnement résultent suffisamment de ce qui précède.

Ce support présente de nombreux avantages par rapport à ceux antérieurement connus, en particulier les suivants:

– l'efficacité et le silence du fonctionnement, comme il résulte de l'expérience,

– la robustesse et la longévité, vu que ledit support fait appel uniquement à des composants mécaniquement résistants et peu sollicités en déformation au cours de leur fonctionnement,

– la simplicité de la fabrication et du montage et donc le faible prix de revient.

Comme il va de soi, et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes, notammment les suivantes.

La limitation des amplitudes de déformation de la mambrane 6 pourrait être assurée autrement que par butée axiale de portions de cette membrane contre des portions en regard de disque perforés fixes 9 et 10.

C'est ainsi que cette limitation pourrait être assurée par l'incorporation d'une armature inextensible dans la membrane ou par un choix judicieux du matériau constitutif de cette membrane (éventuellement une matière plastique) ou encore par prévision de gorges appropriées dans les faces de ladite membrane, les gorges évidées dans chaque face étant ouvertes, avec par exemple leurs faces parallèles, pour l'état plat de la membrane, et au contraire fermées lorsque ladite face atteint sa concavité maximum: ces gorges peuvent présenter la forme générale d'une spirale s'étendant sur toute la face considérée de la membrane, ou encore celle de cercles concentriques.

Dans de tels cas, les disques ne sont plus nécessaires et l'on peut supprimer du support ci-dessus décrit le second disque 10 et/ou la portion centrale du premier disque 9; dans chaque cas, on conserve la zone phériphérique de ce premier disque 9, laquelle se limite alors à une rondelle dont la portion interne porte le bourrelet 8 et dont les portions médiane et externe correspondent respectivement aux arceaux $9_2$ et $9_1$ ci-dessus.

Lorsque le second disque 10 est supprimé, le bourrelet 8 est directement en contact, axialement et radialement, avec la paroi élastique 4 au niveau de la portion, de son bord externe, la plus éloignée du premier disque ou de la rondelle qui vient d'être definie.

**Revendications**

1. Dispositif antivibratoire destiné à être interposé aux fins de support et d'amortissement entre deux éléments rigides, constitué par un boîtier étanche interposé entre les deux éléments rigides, boîtier comportant deux pièces rigides (2, 3) solidarisables respectivement avec les deux éléments rigides, une première paroi élastique (4) reliant de façon étanche l'une des pièces rigides (3) à une armature annulaire rigide (1) faisant partie de la seconde pièce (2), une seconde paroi élastique (5) portée de manière étanche par l'armature annulaire (1), une cloison déformable (6) également portée de manière étanche par l'armature annulaire, entre les deux parois élastiques, et divisant l'intérieur du boîtier en deux chambres (A, B), ladite cloison déformable étant constituée par une membrane mince (6) en matériau élastique entourée d'un bourrelet annulaire continu (8) venu de moulage avec elle, bourrelet dont une face est appliquée axialement, directement ou non, contre la paroi élastique en regard (4), les deux chambres communiquant entre elles par un passage étranglé (7) essentiellement constitué par un canal curviligne ($7_1$), des moyens pour limiter à une amplitude faible, c'est-à-dire inférieure à 1 mm, les déformations de la cloison selon la direction axiale perpendiculaire à son plan moyen, et une masse liquide remplissant l'une des deux chambres et au moins la portion, de l'autre chambre, contiguë à la cloison déformable, caractérisé en ce que l'autre face du bourrelet est appliquée axialement contre une rondelle métallique (9) dont le bord extérieur ($9_1$) déborde radialement au-delà du bourrelet et est fixé sur l'armature annulaire rigide ci-dessus (1), entre les deux parois élastiques (4, 5), en ce que le canal curviligne ($7_1$) est délimité intérieurement par la face externe du bourrelet; sur l'une de ses faces axiales, par la rondelle (en $9_2$); et extérieurement et sur son autre face axiale, par des plages de la susdite paroi élastique en regard (4), et en ce que ledit canal curviligne ($7_1$) communique avec la première chambre (A) per une lumière ($7_2$) évidée dans le bord extérieur ($9_1$) de la rondette métallique (9) et avec la seconde chambre (B) par une rainure coudée

($7_3$) creusée dans la face intérieure de la paroi élastique en regard (4).

2. Dispositif antivibratoire selon la revendication 1, caractérisé en ce que la rondelle consitute la portion périphérique d'un disque mince perforé (9).

3. Dispositif antivibratoire selon la revendication 2, caractérisé en ce que le bourrelet (8) est encagé jointivement entre la rondelle et la portion périphérique d'un second disque métallique mince perforé (10) de plus petit diamètre que le premier (9).

4. Dispositif antivibratoire selon la revendication 3, caractérisé en ce que les moyens pour limiter l'amplitude des déformations de la membrane (6) comprennent des saillies prévues sur cette membrane et/ou sur les faces, des disques, en regard de ladite membrane.

5. Dispositif antivibratoire selon la revendication 4, caractérisé en ce que les saillies sont des bossages bombés (15), de préférence hémisphériques, venus de moulage avec la membrane (6).

6. Dispositif antivibratoire selon l'une quelconque des précédentes revendications, caractérisé en ce que la paroi élastique qui vient en contact, directement ou non, avec le bourrelet (8) et qui délimite en partie le passagge étranglé (7) est la première paroi élastique (4).

7. Dispositif antivibratoire selon l'une quelconque des précédentes revendications, caractérisé en ce que la fixation du bord extérieur ($9_1$) de la rondelle sur l'armature annulaire rigide (1) est assurée par serrage de ce bord entre une bague métallique (11) appliqué axialement contre cette armature et un rebord annulaire rabattu ($12_1$) d'une plaquette métallique comprise par ladite armature.

8. Dispositif antivibratoire selon l'une quelconque des précédentes revendications, caractérisé en ce que la seconde paroi élastique (5) est constituée par une feuille mince plissée très déformable.


**Patentansprüche**

Antischwingungseinrichtung, die zur Abstützung und Dämpfung zwischen zwei starren Elementen eingefügt werden kann und aus folgenden Teilen besteht: einem dichten Gehäuse, das zwischen den starren Elementen eingesetzt ist und zwei starre Teile (2, 3) enthält, die an jeweils einem der beiden starren Elemente anbringbar sind, einer ersten elastischen Wandung (4) die eins der starren Teile (3) dicht mit einer ringförmigen starren Armatur (1) verbindet, die ein Teil des zweiten starren Teils (2) ist, einer zweiten elastischen Wandung (5), die dicht von der ringförmigen Armatur (1) gehalten wird, einer deformierbaren Trennwand (6), die ebenfalls dicht zwischen den beiden elastischen Wänden durch die ringförmige Armatur gehalten wird und den Innenraum des Gehäuses in zwei Kammern (A, B) unterteilt, wobei die deformierbare Trennwand aus einer dünnen Membran (6) aus elastischem Material besteht, die von einem durchgehenden ringförmigen Wulst (8) umgeben ist, der durch Formen zusammen mit der Membran hergestellt ist und eine Oberfläche des Wulstes axial, direkt oder indirekt gegen die elastische Wandung (4) gedrückt wird und wobei die beiden Kammern untereindander über einen engen Durchgang (7) in Verbindung stehen, der im wesentlichen aus einem gebogenen Kanal ($7_1$) gebildet wird, sowie Einrichtungen zur Begrenzung der Deformationen der Trennwand in axialer Richtung senkrecht zu der Mittelebene auf eine schwache Amplitude, die kleiner ist als 1 mm, und einem flüssigen Medium, das eine der beiden Kammern und wenigstens den Teil der anderen Kammer ausfüllt, der an die deformierbare Trennwand angrenzt, dadurch gekennzeichnet, dass die andere Oberfläche des Wulstes axial gegen eine runde Metallscheibe (9) gedrückt wird, deren äusserer Rand ($9_1$) radial gegenüber dem Wulst vorsteht und an der ringförmigen starren Armatur (1) zwischen den beiden elastischen Wandungen (4, 5) befestigt ist, dass der gebogene Kanal ($7_1$) nach innen zu durch die Aussenfläche des Wulstes, an einer der axialen Oberflächen durch die runde Scheibe ($9_2$) und aussen und an der anderen axialen Seite durch Flächen der elastischen Wandung (4) begrenzt wird und dass der gebogene Kanal ($7_1$) mit der ersten Kammer (A) über eine Öffnung ($7_2$) in dem äusseren Rand ($9_1$) der runden Metallscheibe (9) und mit der zweiten Kammer (B) über eine gebogene Rinne ($7_3$) in Verbindung steht, die in der inneren Oberfläche der elastischen Wandung (4) ausgenommen ist.

2. Antivibrationsvorrichtung nach Anspruch 1, dadurch gekennzeichnet, dass die runde Scheibe den Umfangsabschnitt einer dünnen mit Bohrungen versehenen Scheibe (9) bildet.

3. Antivibrationsvorrichtung nach Anspruch 2, dadurch gekennzeichnet, dass der Wulst (8) dicht zwischen der runden Scheibe und dem Umfangsabschnitt einer zweiten dünnen, mit Bohrungen versehenen Metallscheibe (10) eingespannt ist, die einen kleineren Durchmesser hat als die erste Scheibe (9).

4. Antivibrationsvorrichtung nach Anspruch 3, dadurch gekennzeichnet, dass die Einrichtungen zum Begrenzen der Amplitude der Deformationen der Membran (6) aus Vorsprüngen bestehen, die an der Membran und/oder auf den Oberflächen der Scheiben gegenüber der Membran vorgesehen sind.

5. Antivibrationsvorrichtung nach Anspruch 4, dadurch gekennzeichnet, dass die Vorsprünge vorzugsweise halbkugelförmige gewölbte Verdickungen sind, die zusammen mit der Membran (6) durch Formen gebildet werden.

6. Antivibrationsvorrichtung nach einem der vorhergehenden Ansprüche, dadurch gekennzeichnet, dass die elastische Wandung, die direkt oder indirekt mit dem Wulst (8) in Berührung kommt und die teilweise den engen Durchlass (7) begrenzt, die erste elastische Wandung (4) ist.

7. Antivibrationsvorrichtung nach einem der vorhergehenden Ansprüche, dadurch gekennzeichnet, dass die Befestigung des äusseren Randes ($9_1$) der runden Scheiben an der ringförmigen starren Armatur (1) durch Verklemmen des Randes zwischen einem Metallring (11), der axial gegen die Armatur gedrückt wird, und einem ringförmigen umgebogenen Rand ($12_1$) einer Metallplatte erfolgt, die in die Armatur einbegriffen ist.

8. Antivibrationsvorrichtung nach einem der vorhergehenden Ansprüche, dadurch gekennzeichnet, dass die zweite elastische Wandung (5) aus einer dünnen plissierten, stark deformierbaren Folie besteht.

## Claims

1. Antivibration device designed to be interposed for support and damping purposes between two rigid elements, constituted by a fluid-tight box interposed between the two rigid elements, said box comprising two rigid parts (2, 3) which can be made fast respectively with the two rigid elements, a first elastic wall (4) connecting one of the rigid parts (3) in fluid-tight manner to a rigid annular armature (1) forming a portion of the second part (2), a second elastic wall (5) borne in fluid-tight manner by the annular armature (1), a deformable partition (6) also borne in fluid-tight manner by the annular armature, between the two elastic walls, and dividing the inside of the box into two chambers (A, B), said deformable partition being constituted by a thin diaphragm (6) made of an elastic material surrounded by a continuous annular beading (8) produced by molding with it, a face of said beading being axially applied, directly or not, against the opposite elastic wall, the two chambers communicating with each other through a throttled passage (7) essentially constitued by a curvilinear channel ($7_1$) means for limiting to a small amplitude, that is to say less than 1 mm, the deflections of the partition in the axial direction perpendicular to its middle plane and a liquid mass filling one of the two chambers and at least the portion, of the other chamber, contiguous with the deformable partition, characterized in that the other face of the beading is axially applied against a metal washer (9) whose outer edge ($9_1$) extends radially beyond the beading and is fixed to the above-mentioned rigid annular armature (1), between the two elastic walls (4, 5), in that the curvilinear channel is bounded internally by the outer surface of the beading, on one of its axial faces, by the washer (at $9_2$), and externally and on its other axial face, by areas of the above-said opposite elastic wall (4), and in that said curvilinear channel ($7_1$) communicates with the first chamber (A) by a port ($7_2$) formed in the external area ($9_1$) of the metallic washer (9) and with the second chamber (B) by an elbowed groove ($7_3$) hollowed in the inner face of the opposite elastic wall (4).

2. Antivibration device according to claim 1, characterized in that the washer constitutes the peripheral portion of a perforated thin disk (9).

3. Antivibration device according to claim 2, characterized in that the beading (8) is encaged contiguously between the washer and the peripheral portion of a second perforated thin metal disk (10) of smaller diameter than the first (9).

4. Antivibration device according to claim 3, characterized in that the means for limiting the amplitude of the deflections of the diaphragm (6) comprise projections provided on this diaphragm and/or on the faces, of the disks, opposite said diaphragm.

5. Antivibration device according to claim 4, characterized in that the projections are convex bulges (15), preferably hemispherical, formed by molding with the diaphragm (6).

6. Antivibration device according to any one of the preceding claims, characterized in that the elastic wall which comes into contact, directly or not, with the beading (8) and which defines in part the throttled passage (7), is the first elastic wall (4).

7. Antivibration device according to any one of the preceding claims, characterized in that the fastening of the outer edge ($9_1$) of the washer to the rigid annular armature (1) is ensured by clamping this edge between a metal ring (11) applied axially against this armature and a turned-back annular rim ($12_1$) of a metal plate comprised by said armature.

8. Antivibration device according to any one of the preceding claims, characterized in that the second elastic wall (5) is constituted by a very deformable pleated thin sheet.

# FIG.1.

# FIG.2.